# EUROPEAN PATENT APPLICATION

(11) **EP 1 043 127 A1**
(43) Date of publication of application: **11.10.2000**
(21) Application number: 00302067.4
(22) Date of filing: 14.03.2000
(51) Int. Cl.: B25J 15/06, B65G 49/06, B65G 47/91

(54) **Panel manipulation device**

(30) Priority: 18.03.1999 GB 9906213
(71) Applicant: GGR Glass Services Limited, Rochdale OL11 1NR (GB)
(72) Inventor: The designation of the inventor has not yet been filed
(74) Representative: Waddington, Richard

(57) **Abstract**

A panel manipulation device (10) for fitting a glass panel (32) to a building comprises four sucker portions (12a-12d) mounted onto the ends of arm portions (14a-14d) of a frame section (16). The frame section (16) is hydraulically adjustable about three joints (18, 20 & 22) each of which has mutually perpendicular axes of rotation. The frame (16) and joints (18, 20 & 22) are mounted on an arm (24) which is telescopically extendable and is adjustable to both raise and lower the frame (16), joints (18, 20 & 22) and glass panel (32) and to move from side to side. The panel manipulation device (10) is adapted to be fitted to a construction vehicle (26).

## Description

This invention relates to a panel manipulation device and to a method of manipulating a panel.

When fitting glass panels to buildings, problems are often encountered in that scaffolding must be erected and cranes used to lift the glass panel to the desired location. Problems result with this procedure because when a building is sited close to a road, traffic is frequently disrupted with obvious disadvantages. Also, the cost of the above procedure is disadvantageously high.

It is an objection of the present invention to address the above mentioned disadvantages.

According to one aspect of the present invention a panel manipulation device comprises a head portion having panel gripping means for gripping a panel defining a panel plane, and head portion adjustment means, which are operable to turn the head portion about an axis substantially perpendicular to the panel plane and to turn the head portion at least partially about at least one axis substantially parallel to the panel plane.

The panel gripping means may comprise at least one sucker portion, operable to grip a panel by forming a vacuum or reduced air pressure between the panel and the or each sucker portion. Preferably, the gripping means comprises four sucker portions. The gripping means may be pneumatic or hydraulic gripping means.

The head portion adjustment means may be operable to rotate the head portion about said axis perpendicular to the panel plane. Said rotation may be in either direction. The rotation may be continuous.

The head portion adjustment means may be operable, preferably by means of a first section, to turn the head portion, preferably through at least 80 degrees, to both sides of a central position, about a first axis substantially parallel to the panel plane. The turning may be a lateral or left/right turning. The axis may coincide with a pivot, formed by two pivotally connected sections of a first joint.

The head portion adjustment means may be operable, preferably by means of a second section, to turn the head portion, preferably through at least 80 degrees to both sides of a central position, about a second axis substantially parallel to the panel plane and preferably at an angle, most preferably substantially at a right angle, to the first axis. The turning may be an attitude or up/down turning. The axis may coincide with a pivot, formed by two pivotally connected sections of a second joint.

The first section of the head portion adjustment means may be located between the second section and the panel gripping means.

The head portion may be mounted on an arm portion, which may extend from a body portion. The arm portion may be extendable, preferably telescopically extendable.

The second section of the head portion adjustment means may extend between the head portion and the arm portion.

The head portion adjustment means may be hydraulically powered. The sections of the head portion adjustment means may comprise hydraulic extension members, which may be hydraulic cylinders. The hydraulic extension members may bridge two sides of the first and/or second joints.

The arm portion may be operable to turn laterally, preferably about a substantially vertical axis, preferably through at least 160 degrees. The arm portion may be operable to move in a vertical direction, preferably about a substantially horizontal axis. Movement of the arm portion may be controlled pneumatically or hydraulically.

The body portion of the panel manipulation device may be mounted on drive means, which may be continuous belts or tracks. The body portion may be operable to turn relative to the drive means.

The body portion may include stabiliser means, which may be adjustable to selectively stabilise the manipulation device. The stabiliser means may comprise at least one arm portion operable to project from the body portion and engage a firm surface at a position spaced from the body portion.

Preferably, the stabiliser means comprises two arm portions, at substantially opposite side of the body portion.

The or each arm portion may be pivotable to its extended position. The or each arm portion may be operable to pivot at least 105 degrees from the body portion.

All of the adjustments of the head portion and/or the body portion may be effected by an operator located in the body portion.

The panel may be a translucent panel. The panel may be a glass panel. The panel may be of plastics material.

According to another aspect a panel manipulation device comprises a head portion having panel gripping means for gripping a panel defining a panel plane and head portion adjustment means, which are operable to turn the head portion about an axis substantially perpendicular to the panel plane and operable to turn the head portion at least partially about two different axes substantially parallel to the panel plane.

The invention extends to a panel manipulation device as described herein which is adapted to be fitted to a construction vehicle. The construction vehicle may be a digger vehicle or a crane vehicle.

According to a further aspect of the present invention a method of manipulating a panel comprises gripping a panel defining a panel plane with gripping means of a head portion of a panel manipulation device, and adjusting the position of the head portion about an axis substantially perpendicular to the panel plane and about at least one axis substantially parallel to the panel plane, in order to place the panel in a position for transport or for fitting in an intended location.

All of the above aspects may be combined with any of the features disclosed herein, in any combination.

A specific embodiment of the present invention will now be described, by way of example, and with reference to the accompanying drawings, in which:
Figure 1 is a schematic perspective view of a panel manipulation device in use;
Figure 2 is a partial schematic side view of a head portion of the panel manipulation device;
Figure 3 is a partial schematic view of the head portion from above;
Figure 4 is a partial schematic side view of the head portion from the front.

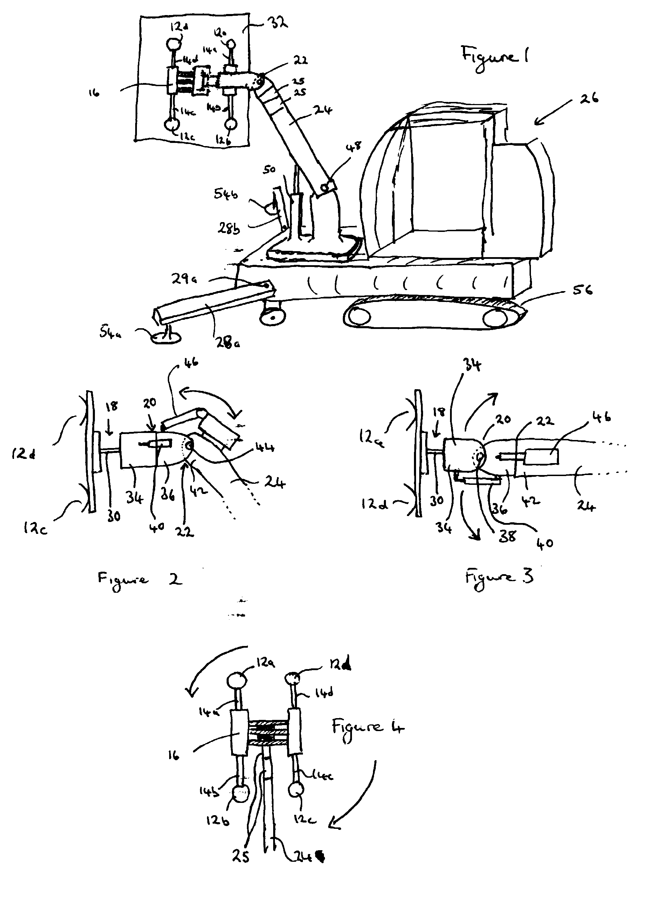

A panel manipulation device 10 comprises four sucker portions 12a to 12d mounted on the ends of arm portions 14a to 14d of a frame section 16. The frame section is adjustable about a first joint 18, a second joint 20 and a third joint 22, each of which have mutually perpendicular axes of rotation. The frame 16 and joints 18 to 22 are mounted on an arm 24, which is telescopically extendable and is adjustable to both raise and lower the frame and joints and to move from side to side. The arm 24 is mounted on a body portion 26. The manipulation device is mounted on tracks to allow the device to be driven to a desired location. Stabilisers 28a and b are provided to stabilise the manipulation device 10. The stabilisers 28 can be pivoted outwards to provide a broader base.

In more detail, the suckers 12a to 12d are hydraulically powered using a hydraulic circuit which is driven from the body portion 26. Tubes (not shown) extend between the suckers 12a to 12d and the body portion to complete the hydraulic link.

The first joint 18 comprises an axle portion 30 which is journalled between the frame 16 and the body of the second joint 20. The first joint 18 is powered hydraulically and is able to rotate continuously in either direction about the axle portion 30. The axle portion 30 is aligned in a direction which is substantially perpendicular to the plane in which a pane of glass 32 is gripped by the suckers 12a to 12d. The frame is also operable to be moved in a lateral sliding movement to 100 mm left or right of a centre position of the frame 16.

The second joint 20 comprises an outer link 34 and an inner link 36. The two links pivot about pivot pin 38. The second joint 20 is powered by a hydraulic cylinder 40. The second joint 20 is able to move both left and right from a centre position to create an angle of approximately 90 degrees with the centre position.

The third joint 22 shares the inner link 36 of the second joint 20 as a part of the joint. A further link 42 is located to the other side of a pivot pin 44. The further link 42 forms a part of the arm 24. The third joint 22 is powered by a hydraulic cylinder 46. The third joint 22 is able to move both upwards and downwards about the pivot pin 44 up to an angle of approximately 90 degrees from a centre position.

The arm 24 is telescopically extendable by means of sections 25 of the arm which are received one within the other. The arm 24 is moveable up and down about pivot 48 by means of a hydraulic cylinder. The arm portion 24 can also be moved from side to side, pivoting about a support 52 to allow the arm 24 to pivot relative to the body portion 26.

The stabilisers 28a and 28b are operable to pivot outwards from the sides of the body portion about pivots 29a and 29b. The stabilisers 28a and 28b are powered by hydraulic cylinders 52a and 52b. The stabilisers 28a and 28b include foot portions 54 which can be dropped to engage the ground and thereby form a stable base for the panel manipulation device 10 to allow heavy loads to be manipulated.

The panel manipulation device 10 also has drive means 56 in the form of continuous tracks which are operable to manoeuvre the panel manipulation device into a required position. Also, the body portion 26 is able to pivot relative to the drive means 56 to allow for extra manoeuvrability.

In use, a sheet of glass 32 is gripped by the suckers 12a to 12d and is transported from a storage/delivery position to a position in which it is to be fitted, ie in a window frame or the like. When the piece of glass 32 has been gripped by the suckers 12a to 12d the first, second and third joints 18 to 22 and the movement of the arm 24 are all used to manipulate the piece of glass 32 to avoid obstacles between the storage position and the intended location. These movements may involve moving the sheet of glass, either from left to right and/or up or down by using the second and third joints to enable the piece of glass 32 to be passed from an interior side of a window frame to an exterior side of the window frame. The piece of glass 32 may also be rotated about the first joint 18 to allow the glass to be passed through the window frame. The left or right sliding movement of the frame 16 mentioned above may be used to make final adjustments to the position of a sheet of glass to allow it to be secured in position using known means.

When manoeuvring the sheet of glass 32 into its final location, the stabilisers may be used to allow the panel manipulation device to achieve its maximum reach, if required.

The panel manipulation device has a maximum forward reach of 3,600 mm from the front of the body portion 26 when the arm 24 is fully extended. The panel manipulation device has a maximum upward reach of 5,000 mm from the ground, again when the arm 24 is fully extended.

All of the various movements of the device disclosed are independent.

The device disclosed herein has significant advantages over the prior art practice of using cranes to lift glass panels to their intended location or using a combination of lifts and scaffolding. By using the device disclosed herein costs can be greatly reduced and the time taken to glaze a building using the device disclosed is greatly reduced.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A panel manipulation device comprises a head portion having panel gripping means for gripping a panel defining a panel plane, and head portion adjustment means, characterised in that said head portion adjustment means are operable to turn the head portion about an axis substantially perpendicular to the panel plane and to turn the head portion at least partially about at least one axis substantially parallel to the panel plane.

2. A panel manipulation device as claimed in claim 1, characterised in that the panel gripping means comprises at least one sucker portion, operable to grip a panel by forming a vacuum or reduced air pressure between the panel and the or each sucker portion.

3. A panel manipulation device as claimed in either claim 1 or 2, characterised in that the head portion adjustment means is operable to rotate the head portion about said axis perpendicular to the panel plane.

4. A panel manipulation device as claimed in claim 3, characterised in that said rotation is in either direction.

5. A panel manipulation device as claimed in either claim 3 or 4, characterised in that the rotation is continuous.

6. A panel manipulation device as claimed in any preceding claim, characterised in that the head portion adjustment means is operable by means of a first section to turn the head portion to both sides of a central position, about a first axis substantially parallel to the panel plane.

7. A panel manipulation device as claimed in claim 6, characterised in that the head portion adjustment means is operable by means of a second section, to turn the head portion to both sides of a central position, about a second axis substantially parallel to the panel plane and at an angle to the first axis.

8. A panel manipulation device as claimed in any preceding claim, characterised in that the head portion is mounted on an arm portion, which extends from a body portion.

9. A panel manipulation device as claimed in any preceding claim, characterised in that the panel is a glass panel.

10. A panel manipulation device as claimed in any preceding claim, characterised in that said panel manipulation device is adapted to be fitted to a construction vehicle.

11. A panel manipulation device comprising a head portion having panel gripping means for gripping a panel defining a panel plane and head portion adjustment means, which are operable to turn the head portion about an axis substantially perpendicular to the panel plane and operable to turn the head portion at least partially about two different axes substantially parallel to the panel plane.

12. A method of manipulating a panel characterised in that said method comprises gripping a panel defining a panel plane with gripping means of a head portion of a panel manipulation device, and adjusting the position of the head portion about an axis substantially perpendicular to the panel plane and about at least one axis substantially parallel to the panel plane, in order to place the panel in a position for transport or for fitting in an intended location.
